# EUROPEAN PATENT APPLICATION

(11) **EP 4 124 590 A1**
(43) Date of publication of application: **01.02.2023**
(21) Application number: 21386047.1
(22) Date of filing: 26.07.2021
(51) Int. Cl.: B65G 1/04, B65G 1/137, B65G 65/00

(54) **MECHANICAL HANDLING APPARATUS**

(71) Applicant: Ocado Innovation Limited, Hatfield, Herts AL10 9UL (GB)
(72) Inventor: FERENDUROS, Michael, Hatfield, HERTS, AL10 9UL (GB); FAINEKOS, Orestis, Hatfield, HERTS, AL10 9UL (GB); EVANGELATOS, Spiros, Hatfield, HERTS, AL10 9UL (GB)
(74) Representative: Wilson, Peter David

(57) **Abstract**

A clamping apparatus, or dock, which is configured to receive a loading frame when the loading frame is being loaded with containers by an automatic frame loading system. The clamping apparatus comprises a first arm and a second arm, with an engagement apparatus received between the two arm. The engagement apparatus may be activated to engage with an inserted loading frame.

## Description

### Technical Field

The present invention relates generally to the field of mechanical handling apparatus and more specifically to a clamping apparatus which may be used to restrict the movement of a frame which receives storage containers.

### Background

Online retail businesses selling multiple product lines, such as online grocers and supermarkets, require systems that are able to store tens or even hundreds of thousands of different product lines. The use of single-product stacks in such cases can be impractical, since a very large floor area would be required to accommodate all of the stacks required. Furthermore, it can be desirable only to store small quantities of some items, such as perishables or infrequently-ordered goods, making single-product stacks an inefficient solution.

International patent application WO 98/049075A (Autostore), the contents of which are incorporated herein by reference, describes a system in which multi-product stacks of containers are arranged within a frame structure.

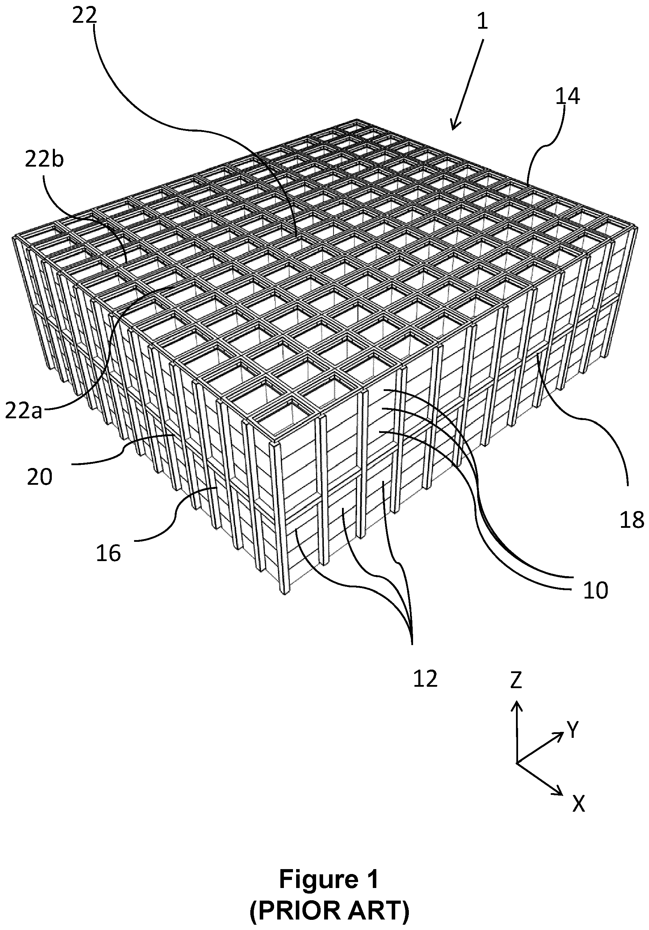

PCT Publication No. WO2015/185628A (Ocado) describes a further known storage and fulfilment system in which stacks of bins or containers are arranged within a framework structure. The bins or containers are accessed by load handling devices operative on tracks located on the top of the frame structure. The load handling devices lift bins or containers out from the stacks, multiple load handling devices co-operating to access bins or containers located in the lowest positions of the stack. A system of this type is illustrated schematically in Figures 1 to 4 of the accompanying drawings.

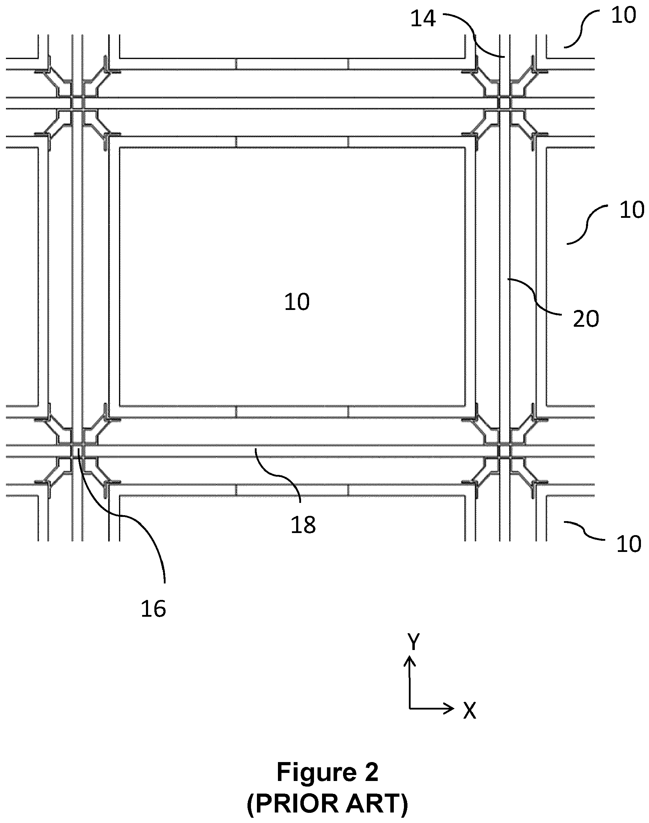

As shown in Figures 1 and 2, stackable containers, known as bins 10, are stacked on top of one another to form stacks 12. The stacks 12 are arranged in a grid framework structure 14 in a warehousing or manufacturing environment. Figure 1 is a schematic perspective view of the framework structure 14, and Figure 2 is a top-down view showing a stack 12 of bins 10 arranged within the framework structure 14. Each bin 10 typically holds a plurality of product items (not shown), and the product items within a bin 10 may be identical, or may be of different product types depending on the application.

The framework structure 14 comprises a plurality of upright members 16 that support horizontal members 18, 20. A first set of parallel horizontal members 18 is arranged perpendicularly to a second set of parallel horizontal members 20 to form a plurality of horizontal grid structures supported by the upright members 16. The members 16, 18, 20 are typically manufactured from metal. The bins 10 are stacked between the members 16, 18, 20 of the framework structure 14, so that the framework structure 14 guards against horizontal movement of the stacks 12 of bins 10, and guides vertical movement of the bins 10.

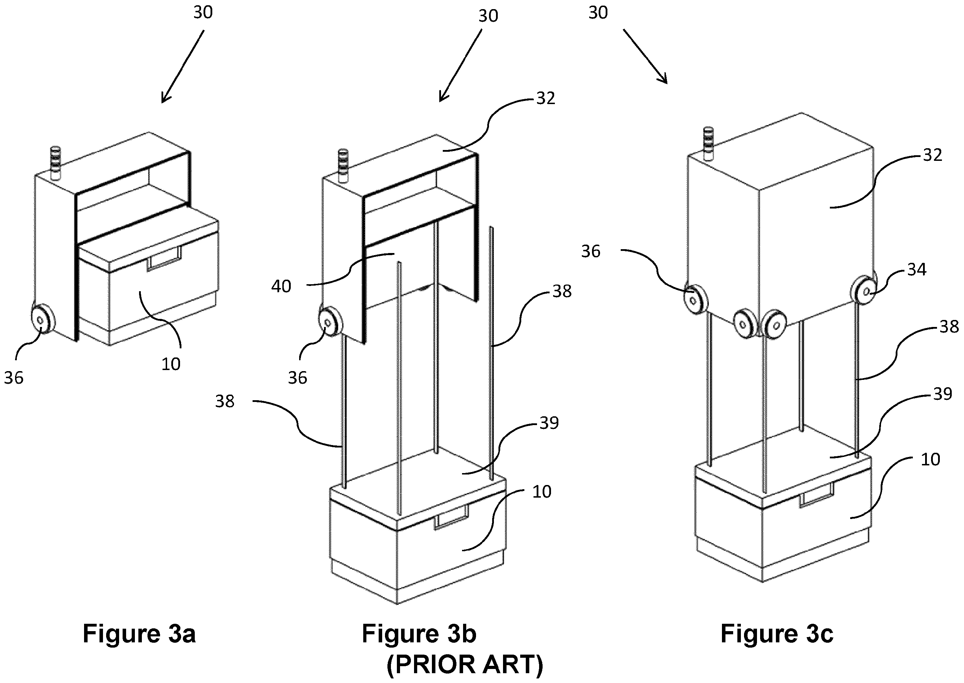

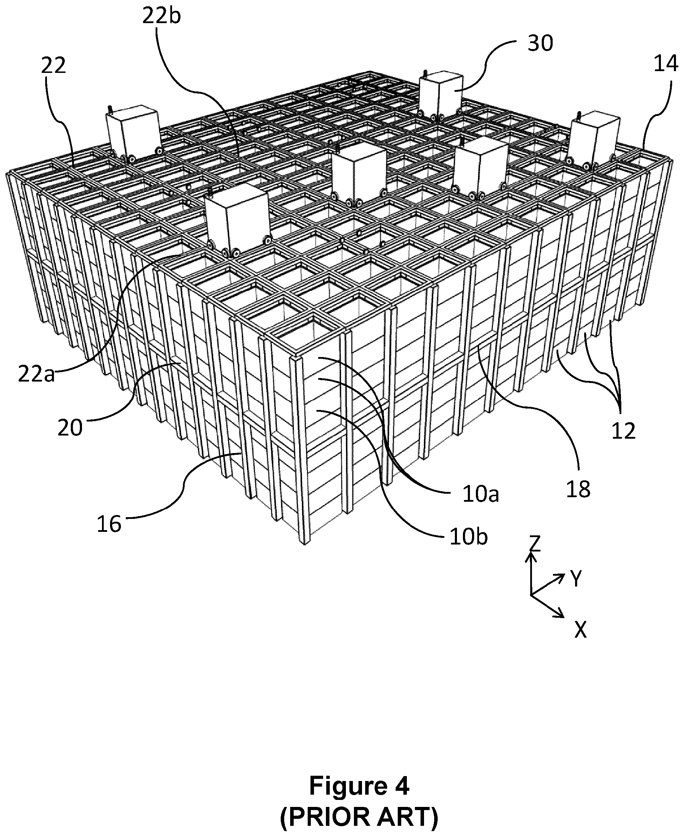

The top level of the frame structure 14 includes rails 22 arranged in a grid pattern across the top of the stacks 12. Referring additionally to Figures 3 and 4, the rails 22 support a plurality of robotic load handling devices 30. A first set 22a of parallel rails 22 guide movement of the load handling devices 30 in a first direction (X) across the top of the frame structure 14, and a second set 22b of parallel rails 22, arranged perpendicular to the first set 22a, guide movement of the load handling devices 30 in a second direction (Y), perpendicular to the first direction. In this way, the rails 22 allow movement of the load handling devices 30 laterally in two dimensions in the horizontal X-Y plane, so that a load handling device 30 can be moved into position above any of the stacks 12.

One form of load handling device 30 is further described in Norwegian patent number 317366, the contents of which are incorporated herein by reference. Figures 3(a) and 3(b) are schematic cross sectional views of a load handling device 30 depositing a bin 10, and Figure 3(c) is a schematic front perspective view of a load handling device 30 lifting a bin 10. However, there are other forms of load handling device that may be used in combination with the system herein described. For example a further form of robotic load handling device is described in PCT Patent Publication No. WO2015/019055, hereby incorporated by reference, (Ocado) where each robotic load handler only covers one grid space of the frame work structure, thus allowing higher density of load handlers and thus higher throughput for a given sized system.

Each load handling device 30 comprises a vehicle 32 which is arranged to travel in the X and Y directions on the rails 22 of the frame structure 14, above the stacks 12. A first set of wheels 34, consisting of a pair of wheels 34 on the front of the vehicle 32 and a pair of wheels 34 on the back of the vehicle 32, is arranged to engage with two adjacent rails of the first set 22a of rails 22. Similarly, a second set of wheels 36, consisting of a pair of wheels 36 on each side of the vehicle 32, is arranged to engage with two adjacent rails of the second set 22b of rails 22. Each set of wheels 34, 36 can be lifted and lowered, so that either the first set of wheels 34 or the second set of wheels 36 is engaged with the respective set of rails 22a, 22b at any one time.

When the first set of wheels 34 is engaged with the first set of rails 22a and the second set of wheels 36 is lifted clear from the rails 22, the wheels 34 can be driven, by way of a drive mechanism (not shown) housed in the vehicle 32, to move the load handling device 30 in the X direction. To move the load handling device 30 in the Y direction, the first set of wheels 34 is lifted clear of the rails 22, and the second set of wheels 36 is lowered into engagement with the second set of rails 22a. The drive mechanism can then be used to drive the second set of wheels 36 to achieve movement in the Y direction.

The load handling device 30 is equipped with a lifting device. The lifting device 40 comprises a gripper plate 39 is suspended from the body of the load handling device 32 by four cables 38. The cables 38 are connected to a winding mechanism (not shown) housed within the vehicle 32. The cables 38 can be spooled in or out from the load handling device 32, so that the position of the gripper plate 39 with respect to the vehicle 32 can be adjusted in the Z direction.

The gripper plate 39 is adapted to engage with the top of a bin 10. For example, the gripper plate 39 may include pins (not shown) that mate with corresponding holes (not shown) in the rim that forms the top surface of the bin 10, and sliding clips (not shown) that are engageable with the rim to grip the bin 10. The clips are driven to engage with the bin 10 by a suitable drive mechanism housed within the gripper plate 39, which is powered and controlled by signals carried through the cables 38 themselves or through a separate control cable (not shown).

To remove a bin 10 from the top of a stack 12, the load handling device 30 is moved as necessary in the X and Y directions so that the gripper plate 39 is positioned above the stack 12. The gripper plate 39 is then lowered vertically in the Z direction to engage with the bin 10 on the top of the stack 12, as shown in Figure 3(c). The gripper plate 39 grips the bin 10, and is then pulled upwards on the cables 38, with the bin 10 attached. At the top of its vertical travel, the bin 10 is accommodated within the vehicle body 32 and is held above the level of the rails 22. In this way, the load handling device 30 can be moved to a different position in the X-Y plane, carrying the bin 10 along with it, to transport the bin 10 to another location. The cables 38 are long enough to allow the load handling device 30 to retrieve and place bins from any level of a stack 12, including the floor level. The weight of the vehicle 32 may be comprised in part of batteries that are used to power the drive mechanism for the wheels 34, 36.

As shown in Figure 4, a plurality of identical load handling devices 30 are provided, so that each load handling device 30 can operate simultaneously to increase the throughput of the system. The system illustrated in Figure 4 may include specific locations, known as ports, at which bins 10 can be transferred into or out of the system. An additional conveyor system (not shown) is associated with each port, so that bins 10 transported to a port by a load handling device 30 can be transferred to another location by the conveyor system, for example to a picking station (not shown). Similarly, bins 10 can be moved by the conveyor system to a port from an external location, for example to a bin-filling station (not shown), and transported to a stack 12 by the load handling devices 30 to replenish the stock in the system.

Each load handling device 30 can lift and move one bin 10 at a time. If it is necessary to retrieve a bin 10b ("target bin") that is not located on the top of a stack 12, then the overlying bins 10a ("non-target bins") must first be moved to allow access to the target bin 10b. This is achieved in an operation referred to hereafter as "digging".

Referring to Figure 4, during a digging operation, one of the load handling devices 30 sequentially lifts each non-target bin 10a from the stack 12 containing the target bin 10b and places it in a vacant position within another stack 12. The target bin 10b can then be accessed by the load handling device 30 and moved to a port for further transportation.

Each of the load handling devices 30 is under the control of a central computer. Each individual bin 10 in the system is tracked, so that the appropriate bins 10 can be retrieved, transported and replaced as necessary. For example, during a digging operation, the locations of each of the non-target bins 10a is logged, so that the non-target bins 10a can be tracked.

The system described with reference to Figures 1 to 4 has many advantages and is suitable for a wide range of storage and retrieval operations. In particular, it allows very dense storage of product, and it provides a very economical way of storing a huge range of different items in the bins 10, while allowing reasonably economical access to all of the bins 10 when required for picking.

### Summary

In general terms, the invention introduces a dock or clamping apparatus which can secure a loading frame whilst an automatic frame loading system is used to load containers into the loading frame.

According to a first aspect there is provided a clamping apparatus arranged to clamp a loading frame, the clamping apparatus comprising: a first arm and a second arm, the first arm arranged such that it is substantially parallel to the second arm; an engagement apparatus comprising a first portion and a second portion, wherein the first portion is fixed and the second portion is configured to be movable from a first position to a second position, the engagement apparatus being received between the first arm and the second arm; and one or more proximity sensors configured to detect the presence of a loading frame received within the first arm and the second arm such that, in use, the second portion of the engagement apparatus is moved from the first position to the second position when the one or more proximity sensors detect the presence of a loading frame.

The second portion of the engagement apparatus may move forward when it is moved from the first position to the second position. The second portion of the engagement apparatus may move upwards when it is moved from the first position to the second position. The movement of the second portion of the engagement apparatus from the first position to the second position may cause the second portion of the engagement apparatus to engage with the loading frame. The movement of the second portion of the engagement apparatus from the first position to the second position may cause the loading frame to be moved forward.

The clamping apparatus may further comprise one or more restraints. The one or more restraints may restrict the forward movement of loading frame. The or each restraint may comprise a limiter portion. The limiter portion of the restraint(s) may restrict vertical movement and/or rotation of the loading frame.

Each of the first and second arms may comprises a first plurality of wheels, the first plurality of wheels being arranged to guide a loading frame between the first and second arms when the loading frame is inserted into the clamping apparatus. Each of the first and second arms may comprise a second plurality of wheels, the second plurality of wheels being arranged to support a loading frame when the loading frame is inserted into the clamping apparatus.

The engagement apparatus may comprise a motor, the motor being coupled to the second portion of the engagement apparatus and being operable to move the engagement apparatus from the first position to the second position. The motor may be located in a separate housing from the second portion of the engagement apparatus.

The first arm and the second arm may be connected to a horizontal member. Furthermore, the first and second restraints and/or the engagement apparatus may be connected to the horizontal member. The horizontal member may comprise a part of a container loading apparatus

According to a second aspect there is provided a storage system comprising: a first set of parallel rails or tracks extending in an X-direction, and a second set of parallel rails or tracks extending in a Y-direction transverse to the first set in a substantially horizontal plane to form a grid pattern comprising a plurality of grid spaces; a plurality of stacks of containers located beneath the rails, and arranged such that each stack is located within a footprint of a single grid space; at least one transporting device, the at least one transporting device being arranged to selectively move in the X and/or Y directions, above the stacks on the rails and arranged to transport a container; a picking station arranged to receive a container transported by the at least one transporting device; and a clamping apparatus as described above.

### Brief Description of the Drawings

Embodiments of the invention will now be described by way of example only with reference to the accompanying drawings, in which like reference numbers designate the same or corresponding parts, and in which:
Figure 1 is a schematic diagram of a framework structure according to a known system;
Figure 2 is a schematic diagram of a top-down view showing a stack of bins arranged within the framework structure of Figure 1;
Figures 3(a) and 3(b) are schematic perspective views of a load handling device depositing a bin and Figure 3(c) is a schematic front perspective view of a load handling device lifting a bin;
Figure 4 is a schematic diagram of a system showing load handling devices operating on the framework structure;
Figure 5 is a schematic diagram of a goods handling system;
Figure 6 is a schematic diagram of a further goods handling system;
Figure 7 shows a schematic depiction of a loading frame received within a clamping apparatus;
Figure 8 shows a schematic depiction of the clamping apparatus without the loading frame present;
Figure 9 shows a schematic depiction of the first and second restraints and the engagement apparatus;
Figure 10 shows a schematic depiction of the engagement apparatus when the movable coupling is in the second position; and
Figure 11 shows a schematic depiction of a loading frame when the movable portion is in its elevated position.

### Detailed Description of Embodiments

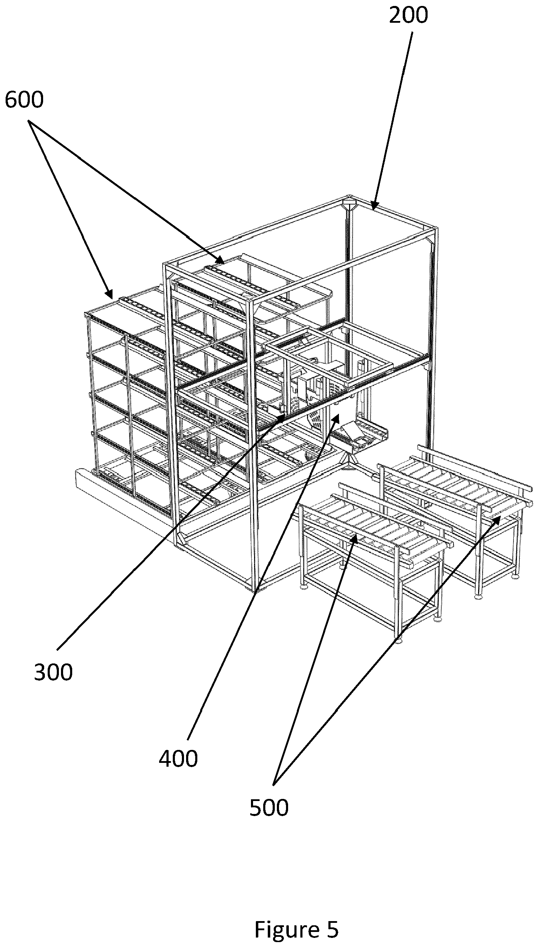

Figure 5 is a schematic diagram of a goods handling system 100 which comprises a gantry frame 200 and a tote handler 300, which is supported from the gantry frame 200. The goods handling systems further comprises one or more spurs 500 and one or more loading frames 600. In use, totes 400, or shipping containers, will be filled with items at a picking station, for example as discussed above with reference to Figures 1 to 4. After the totes have been filled at the picking station then they may be routed to a spur such that they can be loaded into a vehicle, such that the contents of the totes can be delivered to a customer. It should be understood that a typical order may comprise a plurality of totes and the packing system will be co-ordinated such that each of the totes which comprise an order (which may for example comprise a first set of totes from a first packing environment (for example refrigerated products) and a second set of totes from a second packing environment (for example ambient products)) are brought together so that they can be loaded onto the same vehicle in a manner which enables efficient unloading and delivery of each order. The goods handling system 100 enables a tote 400 to be automatically received from a spur 500 and loaded into a tote handler 300. The tote handler can then be moved on the gantry frame to align itself with the appropriate aperture of one of the loading frames 600 such that the tote can be loaded onto the loading frame. The loaded loading frames can then be loaded into a vehicle, or stored for subsequent loading into a vehicle.

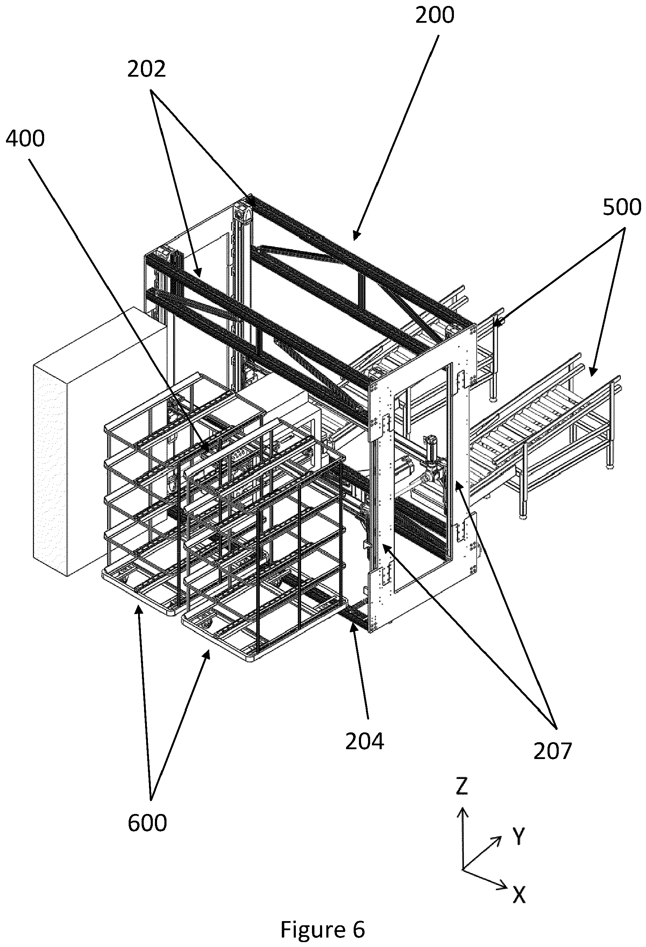

Figure 6 is a schematic diagram of a further goods handling system 100, again comprising a gantry frame 200 and a tote handler 300 supported from the gantry frame, such that a container may be received from a spur 500 and then loaded into a loading frame 600. The gantry frame 200 comprises a base 204, a top 202 and support members 206. Preferably the base 204 describes a rectangular shape and has the same size and shape as the top 202, with each of the support members being perpendicular to both the base and the top, defining a cuboidal space within which the tote handler can be manoeuvred.

The following discussion will assume that the gantry frame is installed on a level floor and references to movements which are 'up' and 'down' should be understood to be referring to movements parallel to the Z-axis and references to the tote moving 'left' and 'right' should be understood to be referring to movements parallel to the X-axis, as is shown in Figure 6. With respect to the loading frame and the tote holder, references to the 'front' refer to the side of the loading frame which is facing the gantry frame. References to the 'rear' refer to the side of the loading frame facing away from the gantry frame.

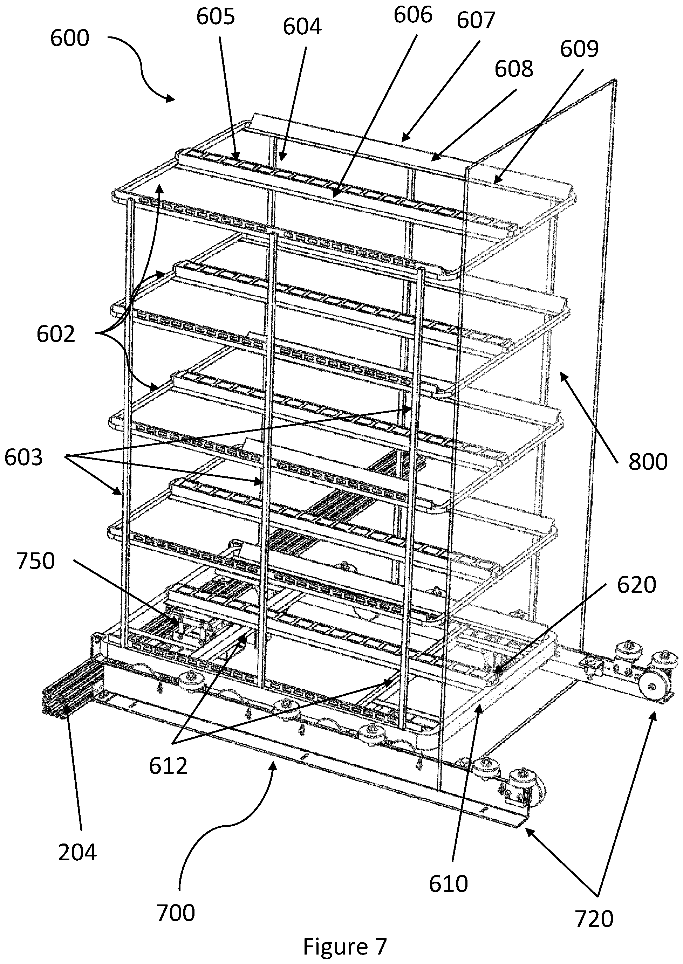

Figure 7 shows a schematic depiction of a loading frame 600 received within a clamping apparatus 700, the securing apparatus being connected to the long side of the base 204 of the gantry frame. The loading frame comprises a base 610, a plurality of shelves 602 and a plurality of supports 603. The base and each of the plurality of shelves have a substantially rectangular shape. The corners of the base and each of the shelves may be rounded. The vertical separation between each shelf, and between the base and the lowest shelf, is substantially equal. The base and each of the plurality of shelves are arranged to be substantially horizontal. The loading frame may comprise 6 supports 603: one support located near to each corner of the loading frame on both long sides of the loading frame; and one support located near to the middle of both long sides of the loading frame. Each of the plurality of supports may be substantially vertical. The loading frame may further comprise four wheels 620, the plurality of wheels being pivotably connected to the base 610 of the loading frame. Preferably one wheel may be located near each corner of the base. Preferably each wheel is located on a long side of the base of the loading frame. The base 610 may further comprise two support struts 612, each of which connect the first long side of the base to the second long side of the base, increasing the rigidity of the loading frame. Provided at the rear of the clamping apparatus is a laser screen 800. If the laser screen is interrupted when a storage container is being loaded into the frame then an emergency stop can be initiated to prevent the risk of injury.

The base and each of the plurality shelves comprise two outer guides 607 and a central guide 604. Each of the outer guides extends along substantially the entire length of the long edge of the respective base or shelf. The central guide extends along substantially the entire length of the centre of the respective base or shelf, such that it is substantially parallel to the two outer guides located on the respective base or shelf. Each outer guide comprises an inclined portion 608 and a horizontal portion 609. The horizontal portion is arranged to receive a portion of a tote which is loaded into the loading frame. The inclined portion is arranged to slope down towards the central guide. Each central guide 604 comprises a central portion 605 received in between two horizontal portions 606. Each of the horizontal portions are arranged to receive a portion of a tote which is loaded into the loading frame. The central guide divides the respective base or shelf into two portions, each of which is dimensioned to receive a tote. The central portion of the central guide is substantially parallel to the horizontal positions which surround it. If the totes are tapered (that is, the dimensions of the base of the tote are less than the dimensions of the top of the tote such that a first tote may be stacked within a second tote) then the width of the central portion of the central guide should be sufficient that a first tote stored on a base or shelf does not interfere with a second tote stored on the base or shelf.

Each of the loading frames 600 comprises a base and four shelves, with each base or shelf comprising four locations capable of receiving a tote. Each shelf has a front, that is the aspect nearest to the gantry frame, and a back (that is, the aspect furthest from the gantry frame). Each shelf also has a right and left side, with the right and left sides being determined from the front side, such that each shelf comprises a front-right, a front-left, a back-right and a back-left location. Each tote held in the loading frame is supported by the horizontal portions of the respective central guide and the outer guide.

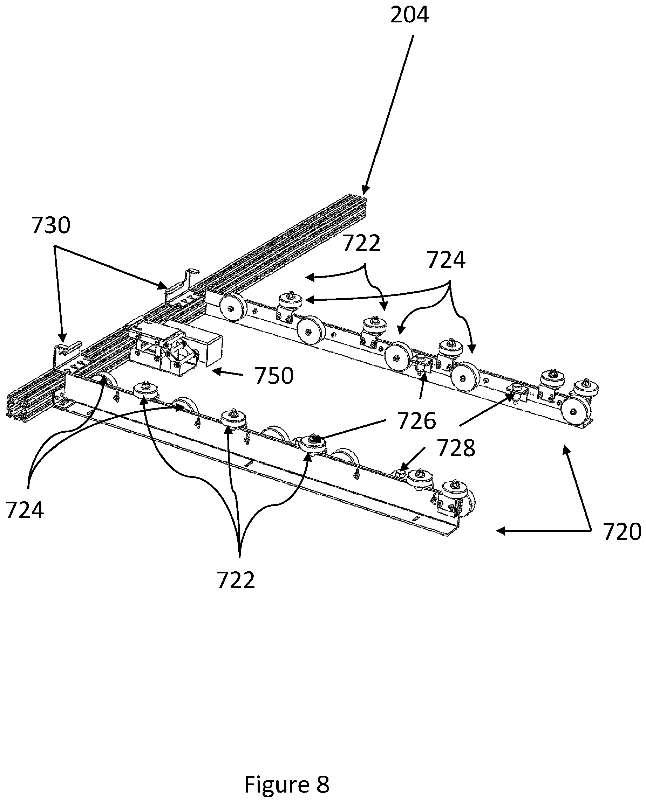

The totes will be automatically loaded into the loading frame by the tote handler 300. In order to assist the automatic loading process the loading frame may be received within a clamping apparatus 700. Figure 7 shows a schematic depiction of a loading frame 600 received within a clamping apparatus 700 and Figure 8 shows a schematic depiction of the clamping apparatus 700 without the loading frame present. The clamping apparatus comprises first and second arms 720, a first plurality of wheels 722, a second plurality of wheels 724, first sensor arrangement 726, second sensor arrangement 728, first and second restraints 730 and engagement apparatus 750. Each of the first and second arms are connected to the floor of the facility in which the goods handling system is located. Each of the first and second arms are also connected to the base 204 of the gantry frame. The first and second arms may be configured such that the first arm is substantially parallel to the second arm. The first arm and the second arm may be connected to the gantry frame base such that each arm is substantially perpendicular to the gantry frame base. The engagement apparatus is also connected to the floor and may further be connected to the gantry frame base. Both the first and second restraints are connected to the gantry frame base. Each of the first and second arms comprises a respective subset of the first plurality of wheels 722 and a second plurality of wheels 724. The first plurality of wheels 722 are located on the on, or near to, the top edge of the arm on which they are received and are arranged to rotate in a plane which is substantially parallel to the plane of the floor. The second plurality of wheels 724 are located on the inner side of the arm, that is the side which faces the other arm of the clamping apparatus, and are arranged to rotate in a plane which is perpendicular to the plane of the floor. The first sensor arrangement 726 and the second sensor arrangement 728 are located on the inner face of each of the first and second arms.

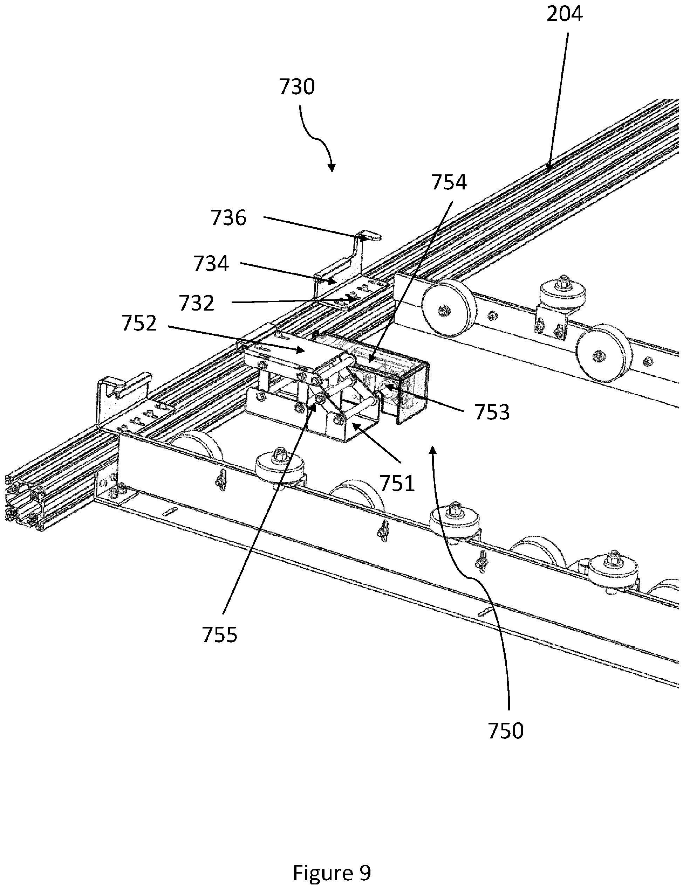

Figure 9 shows a schematic depiction of the first and second restraints 730 and the engagement apparatus 750 in greater detail. Each of the first and second restraints comprises a substantially L-shaped member comprising a first face 732 which is securely attached to the gantry frame base. Each restraint further comprises an end face 734, which is substantially perpendicular to the first face of the restraint. A region of the end face 734 extends further away from the gantry frame base and comprises a limiter portion 736 which is substantially parallel to the first face 732. The engagement apparatus 750 comprises a base portion 751, a movable portion 752, a motor 753 received within a motor housing 754 and a movable coupling 755. The movable coupling is connected to the motor 753. When activated (see below), the motor can cause the movable coupling to move from a first position to a second position. Figure 9 shows the engagement apparatus when the movable coupling is in a first position. It can be seen that the movable portion 752 of the engagement apparatus is in a lowered position, which may be at or lower than the level of the gantry frame base.

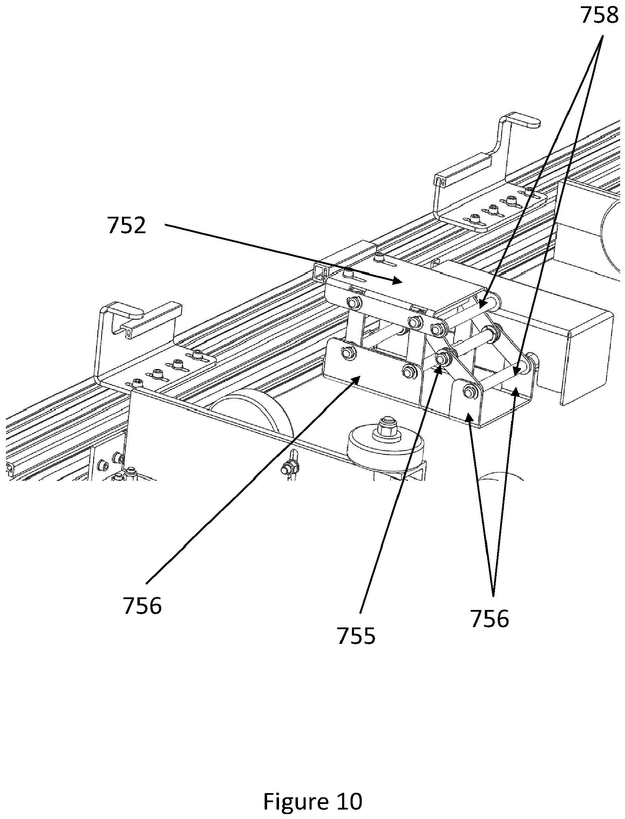

Figure 10 shows a schematic depiction of the engagement apparatus when the movable coupling 755 is in the second position. The movement of the movable coupling has caused the movable portion 752 of the engagement apparatus to be moved upwards and towards the gantry frame base, into an elevated position. The top surface of the movable portion may be raised above the top surface of the gantry frame base when the movable portion is in the elevated position. It should be understood that the movable portion may be repeatedly moved between the lowered position and the elevated position.

In use, an operative may manually move a loading frame between the first and second arms of the clamping apparatus. The first plurality of wheels and the second plurality of wheels guide the movement of the loading frame between the first and second arms. The insertion of the loading frame causes the frame to be lifted from the ground such that the base of the loading frame is supported by the second plurality of wheels 724 as the loading frame is inserted into the clamping apparatus. The first plurality of wheels 722 help to centre the inserted loading frame between the first arm and the second arm and assist the movement of the loading frame as it is inserted towards the front of the clamping apparatus.

One or more proximity sensors (not shown) may detect that the loading frame has been fully inserted into the clamping apparatus. One or more proximity sensors may be located on the gantry frame base. Furthermore, or as an alternative, one or more proximity sensors may be located on the engagement apparatus, for example on the upper face of the movable portion 752, a side face of the movable portion, a side face of the base portion 751, on an inner face of one or both of the arms, etc. For example, the or each proximity sensor may comprise a mechanical switch which detects the frame being fully inserted into the clamping apparatus. Alternatively, the one or more proximity sensors may comprise inductive sensors, or other forms of sensors or detectors suitable for detecting the insertion of the loading frame.

When the loading frame is fully inserted into the clamping apparatus then the front portion of the central guide of the base will be located over the movable portion of the engagement apparatus. The receipt of a signal from the one or more proximity sensors that the loading frame has been fully inserted may cause the motor to move the movable coupling from the first position to the second position. This will cause the movable portion of the engagement apparatus to move from its lowered position to its elevated position.

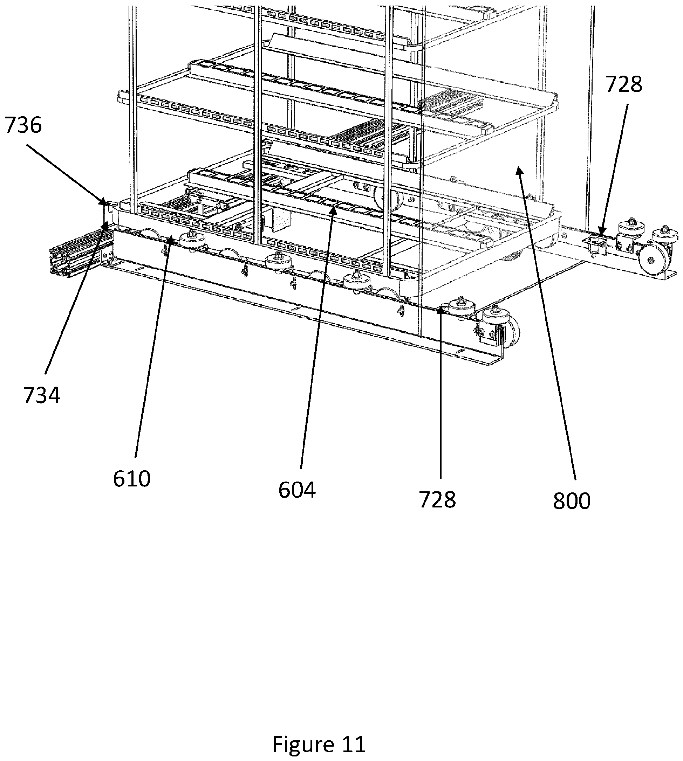

Figure 11 shows a schematic depiction of a loading frame when the movable portion is in its elevated position. The movement of the movable portion causes the movable portion to make contact with the central guide of the base of the loading frame. The loading frame is moved towards the gantry frame base. The end faces of the first restraint and the second restraint will limit the movement of the base of the loading frame towards the gantry frame. The movable portions of the engagement apparatus can be locked in position such that the loading of totes into the loading frame does not lead to significant movement of the loading frame away from the gantry frame. The limiter portions of the first restraint and the second restraint will reduce any rotation of the loading frame which may be caused by the movement of the totes into the loading frame.

Once a loading frame has been loaded and the loading frame is ready to be loaded into a delivery vehicle, or moved to a storage location for subsequent loading, then a control signal may be sent to the motor to release the loading frame. Alternatively, this control signal may also prompt an operative to activate a physical control, such as a switch or button. The combination of the control signal and the physical action may cause the release of the loading frame. The release of the loading frame causes the movable portion of the engagement apparatus to move from its elevated position to its lowered position. This causes the loading frame to be moved away from the gantry frame. When the movable portion of the engagement apparatus has returned to its lowered position then it is no longer in contact with the loading frame and the loading frame may be removed from the clamping apparatus for loading into a vehicle or being moved to a storage location prior to loading into a vehicle.

Although the loading frames are loaded automatically by the goods handling system it should be understood that manual labour is required to insert and remove loading frames from the clamping apparatus. If a worker were to have a limb present within the volume of a loading frame when a tote were being inserted this could lead to injury.

The first sensor arrangement 726 and the second sensor arrangement 728 are arranged to prevent the intrusion of persons or limbs in the frame docking area, while still allowing frames to enter and leave this area without triggering an emergency stop. The first sensor arrangement 726 and the second sensor arrangement 728 may comprise inductive sensors as they will detect the metal construction of an inserted frame, and will not detect the intrusion of, for example a limb. The use of the spatially separated first sensor arrangement 726 and the second sensor arrangement 728 should prevent the inadvertent detection of any metallic item, for example the reinforcement within a safety show from being detected as a frame.

When a frame is inserted into the clamping apparatus, the second inductive sensor arrangement 728 recognizes the incoming item as a frame and mutes the laser sensor 800 so that no controlled emergency stop takes place. The distance between the second sensor arrangement 728 and the laser screen 800 is sufficiently close so that a person cannot fit in between the sensors. As the frame is further inserted into the clamping apparatus, the frame will be detected by the first inductive sensor arrangement 726. The laser sensor 800 will remain muted, allowing the frame to be fully inserted into the clamping apparatus without initiating an emergency stop. At this time, the physical presence of the frame in the clamping apparatus ensures that no person can enter the frame docking or gantry area. Once the frame has been fully inserted, the locking mechanism is automatically activated. Once the locking mechanism is engaged, the Iser sensor 800 is again unmuted after a small timeout and loading of the frame may be started. The system in this state, will detect any limb intrusions in the frame area while totes are being loaded. Any intrusion will cause an emergency stop of the system.

Once the loading is completed, a button is activated for an operator to press. Pressing this button unlocks the frame and mutes the sensor 800 to allow the operator to retrieve the loaded frame. Once the first and second inductive sensor arrangements 726 728 both indicate that the frame has been removed from the clamping apparatus then the sensor 800 is again activated. This configuration prohibits the intrusion of persons or limbs in the empty frame dock or gantry areas.

A similar arrangement of laser sensors may be provided to detect incursions into the loading frame from the side of the loading frame or, as shown in Figure 6, physical screens or other equipment may be located to the sides of the loading frames to prevent access. To assist safe operation, the clamping apparatus may provide audible and/or visible signals to indicate that a loading frame has been fully inserted into the clamping apparatus (and thus should not be moved) or that the loading of a loading frame has been completed and that the loading frame is now ready to be removed from the clamping apparatus.

### Modifications and Variations

Many modifications and variations can be made to the embodiments described above, without departing from the scope of the present invention. It should be understood that the engagement apparatus may take a different form or shape. The engagement apparatus shown in Figure 8 is designed to engage with the loading frame in Figure 7 and it should be understood that a change in the design of the loading frame may lead to a change in design for the engagement apparatus. As an alternative, the engagement apparatus could comprise a jaw or vice-like element which could be activated to grip the loading frame and then move it towards the front of the clamping apparatus. Other forms of engagement apparatus may be contemplated. The loading frame may comprise features which can be engaged with by a complementary feature of the engagement apparatus.

Although it is preferred that the engagement apparatus is located at the front of the clamping apparatus, it should be understood that it could be located elsewhere within the clamping apparatus, for example towards the rear of the clamping apparatus such that the engagement apparatus can engage with the rear of the base 610 of the loading frame. Alternatively, the engagement apparatus may be provided within the clamping apparatus such that it engages with one of the support struts 612 of the loading frame base. In an alternative, multiple engagement apparatuses may be provided.

Figures 9 & 10 show that the motor is received within a motor housing which is separate from the engagement apparatus. It should be understood that the motor could be integrated within the engagement apparatus. The separation of the motor from the engagement apparatus should reduce any mechanical impact on the motor from the insertion and/or removal of the loading frames. The nature of the coupling between the motor and the engagement means may take a different form from that which is described above and shown in Figures 8 &9.

The foregoing description of embodiments of the invention has been presented for the purpose of illustration and description. It is not intended to be exhaustive or to limit the invention to the precise form disclosed. Modifications and variations can be made without departing from the spirit and scope of the present invention.

According to an aspect, the present invention provides a clamping apparatus, or dock, which is configured to receive a loading frame when the loading frame is being loaded with containers by an automatic frame loading system. The clamping apparatus comprises a first arm and a second arm, with an engagement apparatus received between the two arm. The engagement apparatus may be activated to engage with an inserted loading frame.

## Claims

1. A clamping apparatus arranged to clamp a loading frame, the clamping apparatus comprising:
a first arm and a second arm, the first arm arranged such that it is substantially parallel to the second arm;
an engagement apparatus comprising a first portion and a second portion, wherein the first portion is fixed and the second portion is configured to be movable from a first position to a second position, the engagement apparatus being received between the first arm and the second arm; and
one or more proximity sensors configured to detect the presence of a loading frame received within the first arm and the second arm such that, in use, the second portion of the engagement apparatus is moved from the first position to the second position when the one or more proximity sensors detect the presence of a loading frame.

2. A clamping apparatus according to claim 1, wherein the second portion of the engagement apparatus moves forward when it is moved from the first position to the second position.

3. A clamping apparatus according to claim 2, wherein the second portion of the engagement apparatus moves upwards when it is moved from the first position to the second position.

4. A clamping apparatus according to any of claims 1 to 3, wherein the movement of the second portion of the engagement apparatus from the first position to the second position causes the second portion of the engagement apparatus to engage with the loading frame.

5. A clamping apparatus according to claim 4, wherein the movement of the second portion of the engagement apparatus from the first position to the second position causes the loading frame to be moved forward.

6. A clamping apparatus according to any of claims 1 to 5, wherein the clamping apparatus further comprises one or more restraints.

7. A clamping apparatus according to claim 6 when dependent on claim 5, wherein the one or more restraints restricts the forward movement of loading frame.

8. A clamping apparatus according to claim 6 or claim 7, wherein the or each restraint comprises a limiter portion.

9. A clamping apparatus according to claim 8 when dependent on claim 7, wherein the limiter portion of the one or more restraints restricts vertical movement or rotation of the loading frame.

10. A clamping apparatus according to any of claims 1 to 9, wherein each of the first and second arms comprises a first plurality of wheels, the first plurality of wheels being arranged to guide a loading frame between the first and second arms when the loading frame is inserted into the clamping apparatus.

11. A clamping apparatus according to any of claims 1 to 10, wherein each of the first and second arms comprises a second plurality of wheels, the second plurality of wheels being arranged to support a loading frame when the loading frame is inserted into the clamping apparatus.

12. A clamping apparatus according to any of claims 1 to 11, wherein the engagement apparatus comprises a motor, the motor being coupled to the second portion of the engagement apparatus and being operable to move the engagement apparatus from the first position to the second position.

13. A clamping apparatus according to claims 12, wherein the motor is located in a separate housing from the second portion of the engagement apparatus.

14. A clamping apparatus according to any of claims 1 to 13, wherein the first arm and the second arm are connected to a horizontal member.

15. A clamping apparatus according to any of claims 1 to 14; wherein the first and second restraints and/or the engagement apparatus are connected to the horizontal member,

16. A clamping apparatus according to any of claims 1 to 15, wherein the horizontal member comprises a part of a container loading apparatus.

17. A storage system comprising:
a first set of parallel rails or tracks extending in an X-direction, and a second set of parallel rails or tracks extending in a Y-direction transverse to the first set in a substantially horizontal plane to form a grid pattern comprising a plurality of grid spaces;
a plurality of stacks of containers located beneath the rails, and arranged such that each stack is located within a footprint of a single grid space;
at least one transporting device, the at least one transporting device being arranged to selectively move in the X and/or Y directions, above the stacks on the rails and arranged to transport a container;
a picking station arranged to receive a container transported by the at least one transporting device; and
a clamping apparatus according to any of claims 1 to 16.
